(19) Europäisches Patentamt
European Patent Office
Office européen des brevets

(11) **EP 3 856 576 B1**

(12) **EUROPÄISCHE PATENTSCHRIFT**

(45) Veröffentlichungstag und Bekanntmachung des Hinweises auf die Patenterteilung:
**21.09.2022 Patentblatt 2022/38**

(21) Anmeldenummer: **18782339.8**

(22) Anmeldetag: **24.09.2018**

(51) Internationale Patentklassifikation (IPC):
**B62J 27/00** (2020.01)    **B62J 45/415** (2020.01)

(52) Gemeinsame Patentklassifikation (CPC):
**B60R 21/0132; B62J 27/00; B62J 45/4151;**
B60R 2021/0018; B60R 2021/0027;
B60R 2021/0088; B60R 2021/01327

(86) Internationale Anmeldenummer:
**PCT/EP2018/075761**

(87) Internationale Veröffentlichungsnummer:
**WO 2020/064079 (02.04.2020 Gazette 2020/14)**

(54) **VERFAHREN UND VORRICHTUNG ZUR ÜBERWACHUNG EINES KRAFTRADS**

METHOD AND DEVICE FOR MONITORING A MOTORCYCLE

PROCÉDÉ ET DISPOSITIF DE SURVEILLANCE D'UNE MOTOCYCLETTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**04.08.2021 Patentblatt 2021/31**

(73) Patentinhaber: **Robert Bosch GmbH**
**70442 Stuttgart (DE)**

(72) Erfinder:
• **HENZLER, Markus**
**70197 Stuttgart (DE)**
• **MAYER, Florian**
**71254 Ditzingen (DE)**
• **SKIERA, Alexander**
**71263 Weil Der Stadt (DE)**

(56) Entgegenhaltungen:
WO-A1-2010/003715    WO-A1-2018/149600
DE-A1-102008 004 307    DE-A1-102012 220 355

## Beschreibung

Die Erfindung geht aus von einem Verfahren zur Überwachung eines Kraftrads nach der Gattung des unabhängigen Patentanspruchs 1. Gegenstand der vorliegenden Erfindung ist auch eine Vorrichtung zur Überwachung eines Kraftrads sowie ein Kraftrad mit einer solchen Vorrichtung.

Aus dem Stand der Technik sind beschleunigungsbasierte Auslöseverfahren für Sicherheitssysteme für Motorradfahrer bekannt. Hierbei kann die Aktivierung eines Sicherheitssystems zum Schutze eines Kraftradfahrers auf Basis von Beschleunigungssignalen erfolgen, welche von korrespondierenden Sensoreinheiten am Kraftrad und/oder am Fahrer und/oder an der Kleidung des Fahrers ermittelt werden können. Sicherheitsfunktionen eines solchen Sicherheitssystems können beispielsweise die Auslösung eines Rückhaltesystems, wie beispielsweise eines Airbags, oder eines Notrufsystems umfassen, welches einen Notruf absetzt, falls ein Unfall passiert ist. Des Weiteren kann durch ein Fahrerassistenzsystem beispielsweise ein Bremseingriff vorgenommen werden.

Die im Stand der Technik beschriebenen Verfahren beinhalten im Wesentlichen eine technische Umsetzung unter Verwendung von Signalwerten der Winkelgeschwindigkeit. Weiter werden Verfahren beschrieben in denen auf die Verwendung von Beschleunigungssensoren eingegangen wird.

In der EP 1 184 233 B1 wird beispielsweise eine Vorrichtung zur Erfassung von Betriebszuständen eines Motorrads beschrieben, welche eine elektronische Steuerungseinheit und einen Beschleunigungssensor aufweist, welcher in der elektronischen Steuereinheit installiert ist. Die beschriebene Vorrichtung soll das Fallen oder das Fallen und eine Kollision des Motorrads erfassen, wobei der Beschleunigungssensor im Wesentlichen so am Kraftrad angeordnet ist, dass eine korrespondierende Erfassungsrichtung des Beschleunigungssensors in einer aufgerichteten normalen Ruhelage in Fahrzeugquerrichtung oder in Fahrzeughochrichtung ausgerichtet ist und so die Gravitationsbeschleunigung erfasst und auswertet.

## Offenbarung der Erfindung

Das Verfahren und die Vorrichtung zur Überwachung eines Kraftrads mit den Merkmalen der unabhängigen Patentansprüche 1 haben den Vorteil, dass die Erkennung und Bewertung von Fahrzuständen nur auf einem Beschleunigungssensor an einem beliebigen Verbauort basiert. Im Gegensatz zum Stand der Technik kann auf die Verwendung von weiteren Signalen bzw. Sensoren, wie beispielsweise Winkelgeschwindigkeiten, verzichtet werden. Zudem können beschleunigungsrelevante Informationen eines bereits am Kraftrad verbauten Sensors ausgewertet werden, so dass Ausführungsformen der vorliegenden Erfindung besonders einfach implementiert werden können.

Ausführungsformen der vorliegenden Erfindung sind in der Lage unterschiedliche Fahrsituationen eines Kraftrads zu schätzen und zu bewerten. Im Fokus liegt hierbei die Unterscheidung einer Pre-Crash-Situation und einer Post-Crash-Situation und optional einer Crash-Situation. Die Fahrsituationen können über einen Logikblock plausibilisiert und zu unterschiedlichen Auslösestrategie, wie beispielsweise zur Auslösung eines Notrufsystems herangezogen werden.

Ausführungsformen der vorliegenden Erfindung stellen ein Verfahren zur Überwachung eines Kraftrads zur Verfügung, welches beschleunigungsrelevante Informationen des Kraftrads erfasst und auswertet. Basierend auf den beschleunigungsrelevanten Informationen und/oder daraus ermittelten Größen werden eine Fahrzeugbewegung und eine Fahrzeuglage im dreidimensionalen Raum geschätzt, wobei die aktuell geschätzte Fahrzeuglage im Raum ausgewertet und als normaler oder kritischer Fahrzustand bewertet wird. Hierbei wird eine Erfassungsrichtung einer Sensoreinheit so vorgegeben, dass die Erfassungsrichtung in einer aufgerichteten normalen Ruhelage des Kraftrads in einer horizontalen Ebene liegt und die erfassten beschleunigungsrelevanten Informationen eine erste Beschleunigungskomponente in Fahrzeuglängsrichtung und eine zweite Beschleunigungskomponente in Fahrzeugquerrichtung umfassen. Ein als kritisch bewerteter Fahrzustand wird mit der geschätzten Fahrzeugbewegung zur Erkennung einer kritischen Ruhelage nach einem Unfall plausibilisiert und bei einer erkannten kritischen Ruhelage wird nach einem Unfall ein Notruf erzeugt.

Zudem wird eine Vorrichtung zur Überwachung eines Kraftrads vorgeschlagen, welche eine Sensoreinheit und eine Auswerte- und Steuereinheit umfasst und eingerichtet ist, das erfindungsgemäße Verfahren auszuführen. Die Sensoreinheit erfasst und gibt die beschleunigungsrelevanten Informationen des Kraftrads an die Auswerte- und Steuereinheit aus, welche die beschleunigungsrelevanten Informationen auswertet und einen aktuellen Fahrzustand ermittelt und bewertet.

Des Weiteren wird ein Kraftrad mit einer solchen Vorrichtung zur Überwachung eines Kraftrads und einer Notrufvorrichtung vorgeschlagen. Hierbei setzt die Notrufvorrichtung den von der Auswerte- und Steuereinheit erzeugten Notruf ab.

Unter dem Kraftrad kann vorliegend ein Zweirad mit einem Antrieb verstanden werden. Hierbei kann der Antrieb ein Verbrennungsmotor oder eine Elektromotor oder eine Kombination aus Verbrennungsmotor und Elektromotor sein. Zudem können Ausführungsformen der Erfindung auch für Elektrofahrräder oder Pedelecs eingesetzt werden.

Unter der Auswerte- und Steuereinheit kann vorliegend ein elektrisches Gerät, wie beispielsweise ein Steuergerät, verstanden werden, welches erfasste Sensorsignale verarbeitet bzw. auswertet. Die Auswerte- und Steuereinheit kann mindestens eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Auswerte- und Steuereinheit beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind. Von Vorteil ist auch ein Computerprogramm mit Programmcode, der auf einem maschinenlesbaren Speichermedium, wie einem Halbleiterspeicher, einem Festplattenspeicher oder einem optischen Speicher gespeichert ist und zur Durchführung der Auswertung verwendet wird, wenn das Programm von der Auswerte- und Steuereinheit ausgeführt wird.

Unter einer Fahrzeuglage kann vorliegend die Orientierung des Kraftrads im dreidimensionalen Raum verstanden werden. Die vorliegende Erfindung basiert dabei auf der Erkenntnis, dass die Fahrzeuglage basierend auf beschleunigungsrelevanten Informationen des Kraftrads, mithin Informationen, die die auf das Kraftrad einwirkenden Beschleunigungen beschreiben oder auf aus den beschleunigungsrelevanten Informationen ermittelten Größen geschätzt werden kann. So kann aus den beschleunigungsrelevanten Informationen oder daraus ermittelten Größen eine resultierende Beschleunigungsinformation bestimmt werden und gegen die Erdbeschleunigung, mithin die Gravitationskraft, abgeglichen werden. Dieser Abgleich kann bspw. zu Winkeln in Bezug ein Fahrzeugkoordinatensystem führen, die die Fahrzeuglage im dreidimensionalen Raum beschreiben können.

Ferner basiert die vorliegende Erfindung auf der Erkenntnis, dass anhand der Fahrzeuglage der Fahrzustand des Kraftrads bestimmt und zumindest in die Klassen normal und kritisch eingeteilt werden kann. Die Einteilung kann dabei bspw. über Bereiche in Bezug auf das Fahrzeugkoordinatensystem erfolgen. Typischerweise werden dafür drei Achsen angenommen. Die Fahrzeuglängsachse, X-Achse, die sich im Wesentlichen in Richtung der Fahrzeuglängsrichtung erstreckt. Die Fahrzeugquerachse, Y-Achse, die sich orthogonal zur X-Achse quer zur Fahrzeuglängsrichtung erstreckt. Die Fahrzeughochachse, Z-Achse, die sich orthogonal zur X- und zur Y-Achse erstreckt.

Der Fußpunkt des Fahrzeugkoordinatensystems wird dabei typischerweise in den Fahrzeugschwerpunkt gelegt. Befindet sich dabei der Sensor, der die auf das Kraftrad einwirkenden Kräfte erfasst nicht ebenfalls im Fahrzeugschwerpunkt, so kann eine geeignete Transformation der erfassten beschleunigungsrelevanten Informationen oder daraus abgeleiteten Größen durchgeführt werden. Die Bereiche können dabei derart angegeben werden, dass sie zum einen basierend auf empirischen Untersuchungen und physikalischen Gegebenheiten die Winkel abdecken, in denen sich ein Kraftrad im Stillstand nicht stabil halten kann und zum anderen unplausible Positionen abdecken. Als unplausible Position kann dabei bspw. ein auf dem Kopf stehendes Kraftrad oder ein Kraftrad, das in einer unplausiblen Stellung auf dem Vorder- bzw. Hinterrad zum Stehen kommt, angesehen werden.

Durch die in den abhängigen Ansprüchen aufgeführten Maßnahmen und Weiterbildungen sind vorteilhafte Verbesserungen des im unabhängigen Patentanspruch 1 angegebenen Verfahrens und der im unabhängigen Patentanspruch 6 angegebenen Vorrichtung möglich.

Besonders vorteilhaft ist, dass die aktuell geschätzte Fahrzeuglage im Raum als normaler Fahrzustand bewertet werden kann, wenn die Fahrzeuglage innerhalb eines definierten Bereichs liegt. Alternativ kann die aktuell geschätzte Fahrzeuglage als kritischer Fahrzustand bewertet werden, wenn die Fahrzeuglage außerhalb des definierten Bereichs liegt. Hierbei kann ein als kritisch bewerteter Fahrzustand plausibilisiert und auf die kritische Ruhelage nach einem Unfall geschlossen werden, wenn bei einer zeitlichen Schwellwertbetrachtung über einen definierten Zeitraum keine Änderung der Fahrzeugbewegung detektiert werden kann. Ein Beispiel hierfür wäre ein auf der Seite liegendes Kraftrad.

In vorteilhafter Ausgestaltung des Verfahrens zur Überwachung eines Kraftrads kann basierend auf den beschleunigungsrelevanten Informationen und/oder daraus ermittelten Größen ein Vorliegen einer Kollision abgeschätzt werden. Hierbei kann auf das Vorliegen einer Kollision geschlossen und ein Notruf erzeugt werden, wenn die beschleunigungsrelevanten Informationen und/oder daraus ermittelte Größen bei einer zeitlichen Schwellwertbetrachtung über einen definierten Zeitraum mindestens einen vorgegebenen Schwellwert überschreiten. So können beispielsweise die gefilterten beschleunigungsrelevanten Informationen als weitere Größen ausgewertet werden.

In weiterer vorteilhafter Ausgestaltung der Vorrichtung zur Überwachung eines Kraftrads kann die Auswerte- und Steuereinheit den Notruf erzeugen und über eine Kommunikationseinheit absetzen. Alternativ kann die Auswerte- und Steuereinheit den ermittelten kritischen oder unkritischen Zustand an die Kommunikationseinheit ausgeben, welche dann den Notruf erzeugen und absetzen kann. Die Übertragung der Signale von der Sensoreinheit zur Auswerte- und Steuereinheit bzw. von der verarbeitenden Auswerte- und Steuereinheit zur Kommunikationseinheit kann kabelgebunden elektronisch, optisch oder mechanisch, sowie kabellos z.B. über Bluetooth stattfinden.

In weiterer vorteilhafter Ausgestaltung der Vorrichtung zur Überwachung eines Kraftrads kann die Auswerte- und Steuereinheit einen Zustandsschätzer umfassen, welcher die Fahrzeuglage im dreidimensionalen Raum und/oder die Fahrzeugbewegung und/oder das Vorliegen einer Kollision abschätzen kann.

In weiterer vorteilhafter Ausgestaltung der Vorrichtung zur Überwachung eines Kraftrads kann die Auswerte- und Steuereinheit die beschleunigungsrelevanten Informationen über mindestens eine Filtereinheit filtern und die weiteren Größen ermitteln.

Ausführungsbeispiele der Erfindung sind in der Zeichnung dargestellt und werden in der nachfolgenden Beschreibung näher erläutert. In der Zeichnung bezeichnen gleiche Bezugszeichen Komponenten bzw. Elemente, die gleiche bzw. analoge Funktionen ausführen.

Kurze Beschreibung der Zeichnungen

Fig. 1 zeigt eine schematische perspektivische Darstellung eines Kraftrads in einer aufgerichteten Ruhelage mit einem Ausführungsbeispiel einer erfindungsgemäßen Vorrichtung zur Überwachung eines Kraftrads.

Fig. 2 zeigt ein schematisches Blockdiagramm eines Ausführungsbeispiels einer erfindungsgemäßen Vorrichtung zur Überwachung eines Kraftrads.

Fig. 3 zeigt ein schematisches Flussdiagramm eines Ausführungsbeispiels eines erfindungsgemäßen Verfahrens zur Überwachung eines Kraftrads.

Fig. 4a - 4d zeigen Beispiele für normale und kritische Fahrzeuglagen

Ausführungsformen der Erfindung

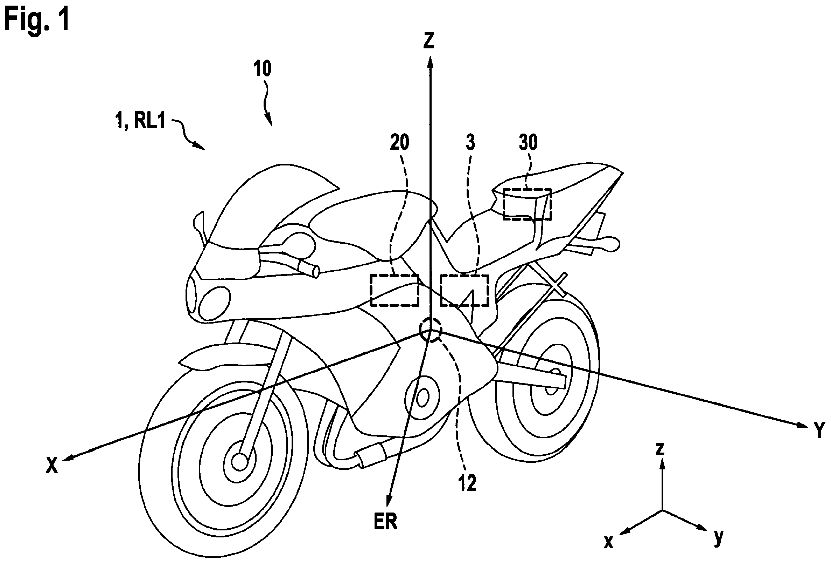

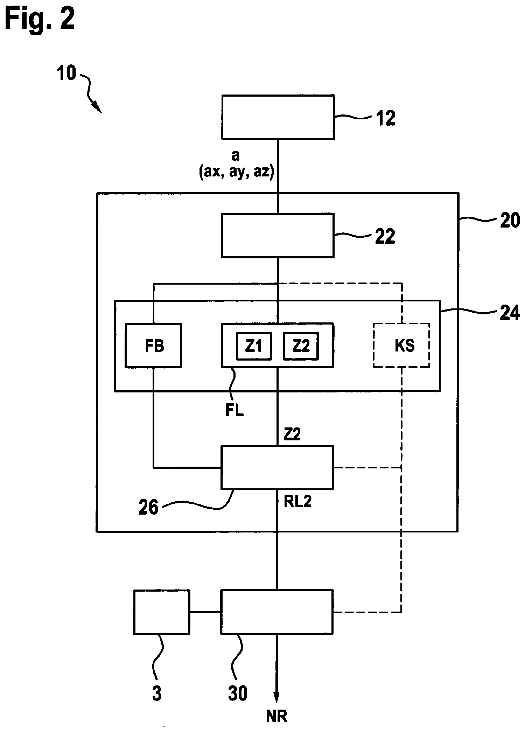

Wie aus Fig. 1 und 2 ersichtlich ist, umfasst das dargestellte Kraftrad 1 eine Vorrichtung 10 zur Überwachung eines Kraftrads 1 und eine Notrufvorrichtung 30. Hierbei setzt die Notrufvorrichtung 30 einen von der Vorrichtung 10 zur Überwachung eines Kraftrads 1 erzeugten Notruf NR ab.

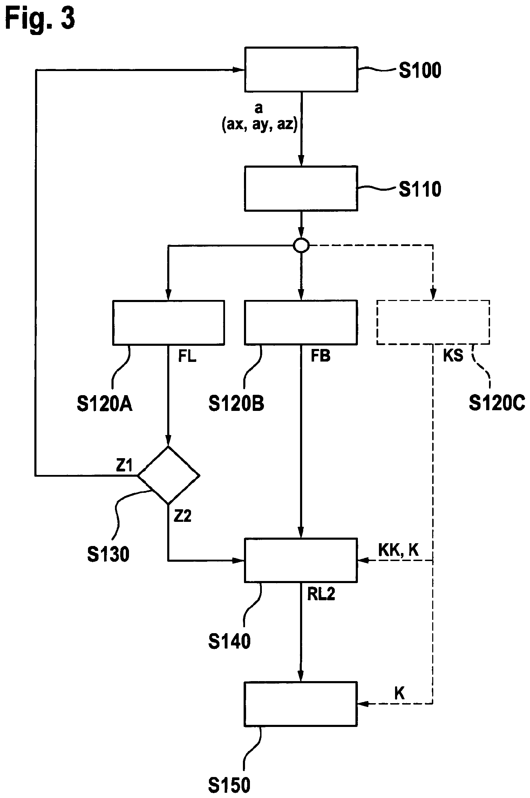

Wie aus Fig. 1 und 2 weiter ersichtlich ist, umfasst die Vorrichtung 10 zur Überwachung eines Kraftrads 1 im dargestellten Ausführungsbeispiel eine Sensoreinheit 12 und eine Auswerte- und Steuereinheit 20. Hierbei erfasst und gibt die Sensoreinheit 12 beschleunigungsrelevante Informationen a, ax, ay, az des Kraftrads 1 an die Auswerte- und Steuereinheit 20 aus, welche die beschleunigungsrelevanten Informationen a, ax, ay, az auswertet und einen aktuellen Fahrzustand Z1, Z2 ermittelt und bewertet. Die Vorrichtung 10 zur Überwachung eines Kraftrads 1 ist eingerichtet, ein in Fig. 3 dargestelltes Verfahren zur Überwachung eines Kraftrads 1 auszuführen. Vorzugsweise wird die Sensoreinheit 12 oberhalb der gefederten Masse des Kraftrads 1, d.h. oberhalb von Schwinge und Gabelbeinen eingebaut.

Wie aus Fig. 1 und 2 weiter ersichtlich ist, ist eine Erfassungsrichtung ER der Sensoreinheit 12 so vorgegeben, dass die Erfassungsrichtung ER in der dargestellten aufgerichteten normalen Ruhelage RL1 des Kraftrads 1 in einer horizontalen Ebene x-y liegt und die erfassten beschleunigungsrelevanten Informationen a, ax, ay eine erste Beschleunigungskomponente ax in Fahrzeuglängsrichtung X und eine zweite Beschleunigungskomponente ay in Fahrzeugquerrichtung Y umfassen. Die Erfassungsrichtung ER weist beispielsweise einen Winkel im Bereich von 30 bis 60°, vorzugsweise einen Winkel von 45° zur Fahrzeugquerrichtung Y auf. Neben der Erfassungsrichtung ER umfasst die Sensoreinheit 12 eine zweite Erfassungsrichtung, die dritte Beschleunigungskomponente az in Fahrzeughochrichtung Z umfasst. In einer bevorzugten Ausführungsform kann die Sensoreinrichtung 12 weitere Erfassungsrichtungen aufweisen. Die erste, die zweite und die weiteren Erfassungsrichtungen können dabei orthogonal zueinander ausgerichtet sein. Die Sensoreinheit 12 erfasst somit die beschleunigungsrelevanten Informationen a, ax, ay, az des Kraftrads 1 und gibt diese an die Auswerte- und Steuereinheit 20 aus. Im dargestellten Ausführungsbeispiel umfasst die Auswerte- und Steuereinheit 20 eine Filtereinheit 22, welche die beschleunigungsrelevanten Informationen a, ax, ay, az filtert und die weiteren Größen für die Auswertung zur Verfügung stellt. So können beispielsweise die gefilterten beschleunigungsrelevanten Informationen a, ax, ay, az als weitere Größen ausgewertet werden. Zudem umfasst die Auswerte- und Steuereinheit 20 einen Zustandsschätzer 24, welcher basierend auf den beschleunigungsrelevanten Informationen a, ax, ay, az und/oder daraus ermittelten Größen in einem ersten Block die Fahrzeugbewegung FB und in einem zweiten Block die Fahrzeuglage FL im dreidimensionalen Raum schätzt. Zusätzlich wird im zweiten Block die aktuell geschätzte Fahrzeuglage FL im Raum ausgewertet und als normaler oder kritischer Fahrzustand Z1, Z2 bewertet. Über die erfassten beschleunigungsrelevanten Informationen a, ax, ay, az und/oder daraus ermittelten Größen können insbesondere der Bewegungen über die Rollachse (X-Achse) und die Nickachse (Y-Achse) ermittelt werden. Ferner können Bewegungen über die Gierachse (Z-Achse) ermittelt werden. Insbesondere über die Bewegungen über die Roll- und Nickachse lässt sich die Fahrzeuglage FL schätzen. Die Auswerte- und Steuereinheit 20 bewertet die aktuell geschätzte Fahrzeuglage FL im Raum als normaler Fahrzustand Z1, wenn die Fahrzeuglage FL innerhalb eines definierten Bereichs liegt. Alternativ bewertet die Auswerte- und Steuereinheit 20 die aktuell geschätzte Fahrzeuglage als kritischer Fahrzustand Z2, wenn die Fahrzeuglage FL außerhalb des definierten Bereichs liegt. Die Bereiche können dabei als Beschleunigungsgrenzwerte in Richtung der beobachteten Fahrzeugachsen oder als Winkel zur Gravitationskraft angegeben werden. Die Auswerte- und Steuereinheit 20 plausibilisiert einen als kritisch bewerteten Fahrzustand Z2 in einem Logikblock 26 mit der geschätzten Fahrzeugbewegung FB, um eine kritische Ruhelage RL2 nach einem Unfall zu erkennen. Die Auswerte- und Steuereinheit 20 schließt auf eine Ruhelage RL, wenn bei einer zeitlichen Schwellwertbetrachtung über einen definierten Zeitraum keine Änderung der Fahrzeugbewegung FB detektiert wird. Fällt eine erkannte Ruhelage zusammen mit einer als kritisch bewerteten geschätzten Fahrzeuglage FL, so plausibilisiert die Auswerte- und Steuereinheit 20 eine kritische Ruhelage RL2 nach einem Unfall. Bei einer erkannten kritischen Ruhelage RL2 nach einem Unfall wird ein Notruf NR erzeugt und über die Kommunikationseinheit 30 abgesetzt bzw. gesendet. Im dargestellten Ausführungsbeispiel umfasst das Kraftrad 1 ein Ortungssystems 3, welches eine aktuelle Position des Kraftrads 1 bestimmt. Diese kann mit dem Notruf NR abgesetzt bzw. an eine Notrufzentrale gesendet werden.

Für die Schätzung der Fahrzeuglage FL auf Basis von beschleunigungsrelevanten Informationen a, ax, ay, az haben sich im Rahmen der vorliegenden Erfindung nachstehende Bedingungen als kritische Fahrzeuglagen FL gezeigt.

Es $a_y$ eine beschleunigungsrelevante Information in Richtung der Y-Achse angegeben in [G] und $a_z$ eine beschleunigungsrelevante Information in Richtung der Z-Achse angegeben in [G]:

$$(a_y | a_z) \begin{cases} 0{,}7 < a_y < 1{,}15 \ [G] \\ -1{,}15 < a_z < 0{,}35 \ [G] \end{cases}$$

Wie aus Fig. 2 weiter ersichtlich ist, führt der Zustandsschätzer 24 im dargestellten Ausführungsbeispiel in einem gestrichelt dargestellten Block eine Kollisionsschätzung KS durch. Die Auswerte- und Steuereinheit 20 schließt auf das Vorliegen einer Kollision K und erzeugt den Notruf NR, wenn die beschleunigungsrelevanten Informationen a, ax, ay, az und/oder daraus ermittelte Größen bei einer zeitlichen Schwellwertbetrachtung über einen definierten Zeitraum mindestens einen vorgegebenen Schwellwert überschreiten. Zusätzlich kann das Ergebnis der Kollisionsschätzung bei der Bewertung des Fahrzustands im Logikblock 26 verwendet werden.

Wie aus Fig. 3 weiter ersichtlich ist, erfasst das Verfahren zur Überwachung eines Kraftrads 1 in einem Schritt S100 die beschleunigungsrelevanten Informationen a, ax, ay, az des Kraftrads. Die Erfassungsrichtung ER der Sensoreinheit 12 wird so vorgegeben, dass die Erfassungsrichtung ER in einer aufgerichteten normalen Ruhelage RL1 des Kraftrads 1 in einer horizontalen Ebene x-y liegt und die erfassten beschleunigungsrelevanten Informationen a, ax, ay, az eine erste Beschleunigungskomponente ax in Fahrzeuglängsrichtung X und eine zweite Beschleunigungskomponente ay in Fahrzeugquerrichtung Y umfassen. Die beschleunigungsrelevanten Informationen a, ax, ay, az werden im dargestellten Ausführungsbeispiel in einem Schritt S110 gefiltert. In einem Schritt S120A wird basierend auf den beschleunigungsrelevanten Informationen a, ax, ay, az und/oder auf daraus ermittelten Größen die Fahrzeuglage FL im dreidimensionalen Raum geschätzt. In einem Schritt S120B wird basierend auf den beschleunigungsrelevanten Informationen a, ax, ay, az und/oder auf daraus ermittelten Größen eine Fahrzeugbewegung FB geschätzt. Die Schritte S120A und S120B werden im dargestellten Ausführungsbeispiel parallel ausgeführt. Bei einem alternativen nicht dargestellten Ausführungsbeispiel werden die Schritte S120A und S120B hintereinander ausgeführt. Im Schritt S130 wird die aktuell geschätzte Fahrzeuglage FL im Raum ausgewertet und als normaler oder kritischer Fahrzustand Z1, Z2 bewertet. Die aktuell geschätzte Fahrzeuglage FL im Raum wird als normaler Fahrzustand Z1 bewertet, wenn die Fahrzeuglage FL innerhalb eines definierten Bereichs liegt. Alternativ wird die aktuell geschätzte Fahrzeuglage als kritischer Fahrzustand Z2 bewertet, wenn die Fahrzeuglage FL außerhalb des definierten Bereichs liegt. Der Bereich dabei als Beschleunigungsgrenzwerte in Richtung der beobachteten Fahrzeugachsen oder als Winkel zur Gravitationskraft angegeben werden. Ergibt die Auswertung einen normalen Fahrzustand Z1, dann kehrt das Verfahren zum Schritt S100 zurück. Ergibt die Auswertung einen kritischen Fahrzustand Z2, dann wird der als kritisch bewertete Fahrzustand Z2 mit der geschätzten Fahrzeugbewegung FB aus dem Schritt S120B zur Erkennung einer kritischen Ruhelage RL2 nach einem Unfall in einem Schritt S140 plausibilisiert. Die Auswerte- und Steuereinheit 20 schließt auf eine Ruhelage RL, wenn bei einer zeitlichen Schwellwertbetrachtung über einen definierten Zeitraum keine Änderung der Fahrzeugbewegung FB detektiert wird. Fällt eine erkannte Ruhelage zusammen mit einer als kritisch bewerteten geschätzten Fahrzeuglage FL, so plausibilisiert die Auswerte- und Steuereinheit 20 eine kritische Ruhelage RL2 nach einem Unfall. Wenn die erkannte kritische Ruhelage RL2 nach einem Unfall als plausibel bewertet wird, dann wird im Schritt S150 ein Notruf NR erzeugt und ausgegeben.

Optional kann im dargestellten Ausführungsbeispiel im gestrichelt dargestellten Schritt S120C basierend auf den beschleunigungsrelevanten Informationen a, ax, ay, az und/oder daraus ermittelten Größen ein Vorliegen einer Kollision K abgeschätzt werden. Der Schritt S120C wird im dargestellten Ausführungsbeispiel parallel zu den Schritten S120A und S120B ausgeführt. Das Ergebnis der Kollisionsabschätzung kann im Logikblock 26 zur Plausibilisierung des erkannten kritischen Fahrzustands Z2 verwendet werden. Im Schritt S120C wird auf das Vorliegen einer Kollision K geschlossen und im Schritt S150 ein Notruf NR erzeugt, wenn die beschleunigungsrelevanten Informationen a, ax, ay, az und/oder daraus ermittelte Größen bei einer zeitlichen Schwellwertbetrachtung über einen definierten Zeitraum mindestens einen vorgegebenen Schwellwert überschreiten.

Das Verfahren zur Überwachung eines Kraftrads 1 kann beispielsweise in Software oder Hardware oder in einer Mischform aus Software und Hardware beispielsweise in einem Steuergerät oder in der Auswerte- und Steuereinheit 20 implementiert sein.

Ausführungsformen der vorliegenden Erfindung sind in der Lage unterschiedliche Fahrsituationen des Kraftrads 1 zu schätzen und zu bewerten. Die beschleunigungsrelevante Informationen a, ax, ay, az des realen Fahrzustands werden gemessen und über die Filtereinheit 22, welche beispielsweise einen Tiefpassfilter umfasst, für die weitere Verarbeitung gefiltert. Die gefilterten Signale werden in der Auswerte- und Steuereinheit 20, welche an einem anderen Einbauort als die Sensoreinheit 12 verbaut ist, von den verschiedenen Blöcken des Zustandsschätzers 24 weiterverarbeitet. Auf Basis der Dynamik der gefilterten Messsignale wird eine Schätzung der Fahrzeugbewegung FB realisiert. Auf Basis der Signalwerte der Horizontalebene x-y findet eine Kollisionsschätzung KS statt. Durch Anwendung einer zeitlichen Schwellwertbetrachtung wird die Kollisionserkennung realisiert. Auf Basis der Signalwerte der Messsignale findet eine Schätzung der Fahrzeuglage FL im Raum statt. Durch Anwendung einer zeitlichen Schwellwertbetrachtung wird die Ruhelageerkennung realisiert. Die von den Blöcken des Zustandsschätzers 24 ausgegeben Zustände Z1, Z2 werden über eine Logikprüfung im Logikblock 26 plausibilisiert und ermöglicht so eine zuverlässige Schätzung des Fahrzustands bzw. der Fahrsituation. Die Übertragung der Signale von der Sensoreinheit 12 zur Auswerte- und Steuereinheit 20 oder von der verarbeitenden Auswerte- und Steuereinheit 20 zur Kommunikationseinheit 30 kann kabelgebunden elektronisch, optisch oder mechanisch, sowie kabellos beispielsweise über Bluetooth stattfinden.

Erkennt die Auswerte- und Steuereinheit 20 durch die Schätzung der Fahrzeuglage FL im Raum, dass sich das Kraftrad 1 in einer Position außerhalb des definierten Bereichs befindet, sendet der Zustandsschätzer 24 ein entsprechendes Signal an den Logikblock 26, welcher beispielsweise als State-Machine ausgeführt ist. Um diese Schätzung zu plausibilisieren, wird auf die Schätzung einer vorliegenden Fahrzeugbewegung FB zurückgegriffen, welche in den Logikblock 26 eingegeben wird. Liegt für einen definierten Zeitraum keine detektierte Fahrzeugbewegung FB bei gleichzeitiger Schätzung einer Fahrzeuglage FL im Raum, welche außerhalb der definierten Grenzen liegt, dann wird auf einen Unfall bzw. ein Kraftrad mit einer kritischen Ruhelage geschlossen. Ein Beispiel hierfür wäre ein auf der Seite liegendes Kraftrad.

Erkennt die Kollisionsschätzung KS eine Schwellwertüberschreitung der beschleunigungsrelevanten Informationen a, ax, ay, az über einen definierten Zeitraum, kann von einer Kollision K mit einem anderen Fahrzeug oder Objekt ausgegangen werden. Diese Situation ist so eindeutig, dass auf eine weitere Plausibilisierung im Logikblock 26 verzichtet werden kann. Bei einer erkannten Kollision K besteht die Möglichkeit direkt ohne Erkennung einer Ruhelage RL2 nach einem Unfall den Notruf NR abzusetzen. Dadurch kann weitere Zeit bis zum Eintreffen der Rettungskräfte eingespart werden. Zudem können Sonderfälle abgedeckt werden, bei welchen beispielsweise das Kraftrad 1 im Kollisionspartner aufrecht stecken bleibt. Alternativ können die Ergebnisse K, KK der Kollisionsschätzung KS im Logikblock 26 zur Erhöhung der Zuverlässigkeit beitragen und als Zusatzinformation bei der Übertragung eines Notrufs NR dienen, um neben der Position auch die Art des Unfalls an die Rettungskräfte zu übermitteln.

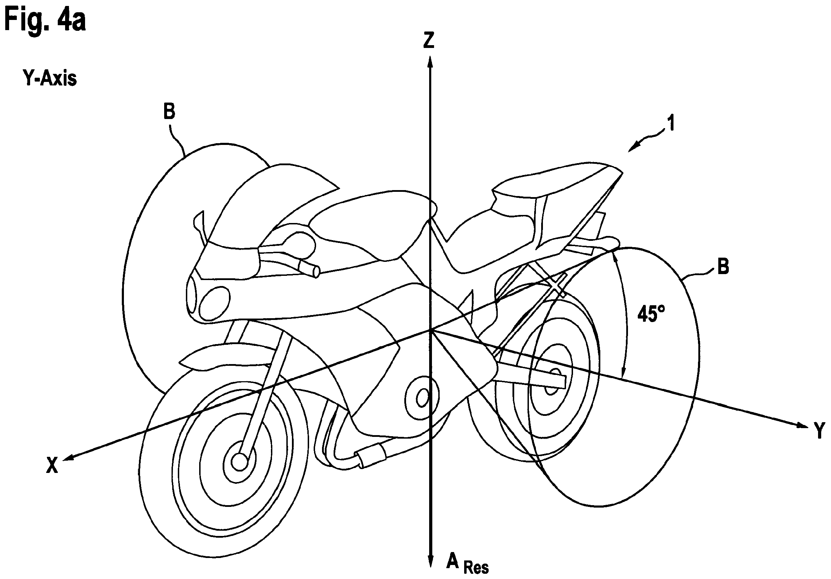

Figuren 4a bis 4d zeigen Beispiele für normale (4a, 4b) und kritische (4c, 4d) Fahrzeuglagen.

Figur 4a zeigt ein Kraftrad in normaler Fahrzeuglage in Bezug auf die Y-Achse und einem im Wesentlichen im Schwerpunkt des Kraftrads aufgestellten Fahrzeugkoordinatensystem mit einer X-, einer Y- und einer Z-Achse. Die resultierende Beschleunigungsinformation $A_{Res}$ zeigt senkrecht nach unten, d.h. im Wesentlichen in Richtung der Gravitationskraft. Das Kraftrad befindet sich somit gemäß der vorliegenden Erfindung in einer normalen Fahrzeuglage. Die Pyramidenkegel um die Y-Achse zeigen schematische Bereiche, die auf eine kritische Fahrzeuglage schließen lassen, wenn die resultierende Beschleunigungsinformation $A_{Res}$ in einen dieser Bereiche fallen würde. Dies wäre bspw. der Fall, wenn das Kraftrad seitlich gekippt ist.

In der dargestellten Variante beträgt der Winkel zwischen der Y-Achse und der Außenwand des Pyramidenkegels beispielhaft 45°. Der Wert kann von physikalischen Gegebenheiten oder empirischen Untersuchungen abhängen.

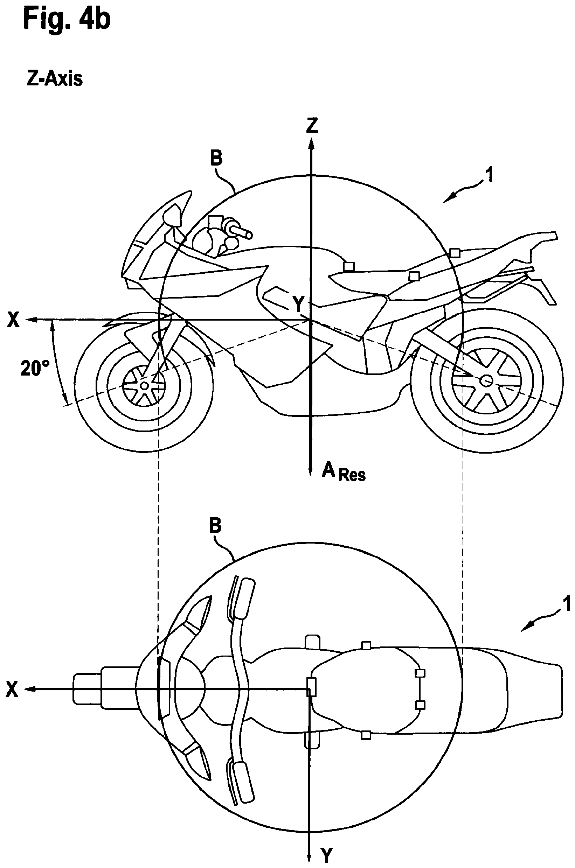

Figur 4b zeigt ein Kraftrad in normaler Fahrzeuglage in Bezug auf die Z-Achse mit Blick auf die von der X-Achse und der Z-Achse aufgespannten Ebene und auf die von der X-Achse und der Y-Achse aufgespannten Ebene. Die resultierende Beschleunigungsinformation $A_{Res}$ zeigt senkrecht nach unten, d.h. im Wesentlichen in Richtung der Gravitationskraft. Das Kraftrad befindet sich somit gemäß der vorliegenden Erfindung in einer normalen Fahrzeuglage. Die dargestellten Bereiche zeigen Bereiche, die auf eine kritische Fahrzeuglage schließen lassen, wenn die resultierende Beschleunigungsinformation $A_{Res}$ in einen dieser Bereiche fallen würde. Diese Bereiche werden bspw. dann erreicht, wenn das Kraft einen sog. "Wheelie", d.h. schnelles Beschleunigen mit Abheben des Vorderrads oder einen sog. "Stopie", d.h. starkes Verzögern mit Abheben des Hinterrads, erfährt.

In der dargestellten Variante deckt der Bereich in Bezug auf die X-Z-Ebene ein Kreissegment ab, dass in einem Winkel von 20° unterhalb der X-Achse beginnt und im Wesentlich bis 20° unterhalb der X-Achse reicht.

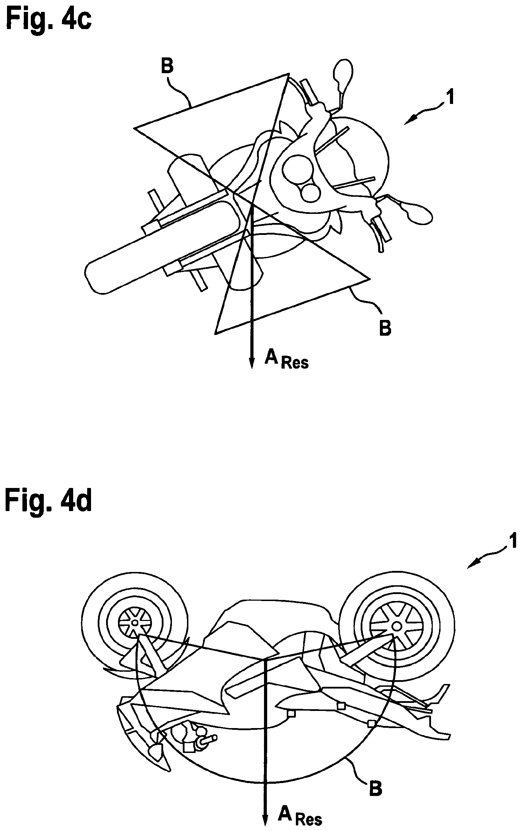

Figur 4c zeigt ein Kraftrad in einer kritischen Fahrzeuglage in Bezug auf die Y-Achse. In der dargestellten Lage ist das Kraftrad seitlich gekippt. Die resultierende Beschleunigungsinformation $A_{Res}$ fällt in den Bereich, der eine kritische Fahrzeuglage anzeigt.

Figur 4d zeigt ein Kraftrad in einer unplausiblen Position und damit kritischen Fahrzeuglage in Bezug auf die Z-Achse. In der dargestellten Position ist das Kraftrad auf dem Lenker und der Sitzbank zum Stillstand gekommen. Die resultierende Beschleunigungsinformation $A_{Res}$ fällt in den bereich, der eine kritische Fahrzeuglage anzeigt.

**Patentansprüche**

1. Verfahren zur Überwachung eines Kraftrads (1), mit den Schritten: Erfassen und Auswerten von beschleunigungsrelevanten Informationen (a, ax, ay, az) des Kraftrads (1), wobei basierend auf den beschleunigungsrelevanten Informationen (a, ax, ay, az) und/oder daraus ermittelten Größen eine Fahrzeugbewegung (FB) und eine Fahrzeuglage (FL) im dreidimensionalen Raum geschätzt werden, wobei die aktuell geschätzte Fahrzeuglage (FL) im Raum ausgewertet und als normaler oder kritischer Fahrzustand (Z1, Z2) bewertet wird, **dadurch gekennzeichnet, dass** eine Erfassungsrichtung (ER) einer Sensoreinheit (12) so vorgegeben wird, dass die Erfassungsrichtung (ER) in einer aufgerichteten normalen Ruhelage (RL1) des Kraftrads (1) in einer horizontalen Ebene (x-y) liegt und die erfassten beschleunigungsrelevanten Informationen (a, ax, ay, az) eine erste Beschleunigungskomponente (ax) in Fahrzeuglängsrichtung (X) und eine zweite Beschleunigungskomponente (ay) in Fahrzeugquerrichtung (Y) umfassen, wobei ein als kritisch bewerteter Fahrzustand (Z2) mit der geschätzten Fahrzeugbewegung (FB) zur Erkennung einer kritischen Ruhelage (RL2) nach einem Unfall plausibilisiert wird und bei einer erkannten kritischen Ruhelage (RL2) nach einem Unfall ein Notruf (NR) erzeugt wird.

2. Verfahren nach Anspruch 1, **dadurch gekennzeichnet, dass** die aktuell geschätzte Fahrzeuglage (FL) im Raum als normaler Fahrzustand (Z1) bewertet wird, wenn die Fahrzeuglage (FL) innerhalb eines definierten Bereichs liegt, oder als kritischer Fahrzustand (Z2) bewertet wird, wenn die Fahrzeuglage (FL) außerhalb des definierten Bereichs liegt.

3. Verfahren nach Anspruch 1 oder 2, **dadurch gekennzeichnet, dass** ein als kritisch bewerteter Fahrzustand (Z2) plausibilisiert und auf die kritische Ruhelage (RL2) nach einem Unfall geschlossen wird, wenn bei einer zeitlichen Schwellwertbetrachtung über einen definierten Zeitraum keine Änderung der Fahrzeugbewegung (FB) detektiert wird.

4. Verfahren nach einem der Ansprüche 1 bis 3, **dadurch gekennzeichnet, dass** basierend auf den beschleunigungsrelevanten Informationen (a, ax, ay, az) und/oder daraus ermittelten Größen ein Vorliegen einer Kollision (K) abgeschätzt wird.

5. Verfahren nach Anspruch 4, **dadurch gekennzeichnet, dass** auf das Vorliegen einer Kollision (K) geschlossen und ein Notruf (NR) erzeugt wird, wenn die beschleunigungsrelevanten Informationen (a, ax, ay, az) und/oder daraus ermittelte Größen bei einer zeitlichen Schwellwertbetrachtung über einen definierten Zeitraum mindestens einen vorgegebenen Schwellwert überschreiten.

6. Vorrichtung (10) zur Überwachung eines Kraftrads (1), welche eingerichtet ist, das Verfahren nach einem der Ansprüche 1 bis 5 auszuführen und eine Sensoreinheit (12) und eine Auswerte- und Steuereinheit (20) umfasst, wobei die Sensoreinheit (12) beschleunigungsrelevante Informationen (a, ax, ay, az) des Kraftrads (1) erfasst und an die Auswerte- und Steuereinheit (20) ausgibt, welche die beschleunigungsrelevanten Informationen (a, ax, ay, az) auswertet und einen aktuellen Fahrzustand (Z1, Z2) ermittelt und bewertet.

7. Vorrichtung (10) nach Anspruch 6, **dadurch gekennzeichnet, dass** die Auswerte- und Steuereinheit (20) den Notruf (NR) erzeugt und über eine Kommunikationseinheit (30) sendet.

8. Vorrichtung (10) nach Anspruch 6 oder 7, **dadurch gekennzeichnet, dass** die Auswerte- und Steuereinheit (20) einen Zustandsschätzer (24) umfasst, welcher die Fahrzeuglage (FL) im dreidimensionalen Raum schätzt und/oder die Fahrzeugbewegung (FB) und/oder das Vorliegen einer Kollision (K) schätzt.

9. Vorrichtung (10) nach einem der Ansprüche 6 bis 8, **dadurch gekennzeichnet, dass** die Auswerte- und Steuereinheit (20) die beschleunigungsrelevanten Informationen (a, ax, ay, az) über mindestens eine Filtereinheit (22) filtert und die weiteren Größen ermittelt.

10. Kraftrad (1) mit einer Vorrichtung (10) zur Überwachung eines Kraftrads (1) und einer Notrufvorrichtung (30), **dadurch gekennzeichnet, dass** die Vorrichtung (10) zur Überwachung eines Kraftrads (1) nach einem der Ansprüche 6 bis 9 ausgeführt ist, wobei die Notrufvorrichtung (30) den von der Auswerte- und Steuereinheit (20) erzeugten Notruf (NR) absetzt.

11. Computerprogramm, welches eingerichtet ist, das Verfahren nach einem der Ansprüche 1 bis 5 auszuführen.

12. Maschinenlesbares Speichermedium, auf dem das Computerprogramm nach Anspruch 11 gespeichert ist.

## Claims

1. Method for monitoring a motorcycle (1), having the following steps: acquiring and evaluating acceleration-related information (a, ax, ay, az) of the motorcycle (1), wherein a vehicle movement (FB) and a vehicle position (FL) in three-dimensional space are estimated based on the acceleration-related information (a, ax, ay, az) and/or quantities ascertained therefrom, wherein the currently estimated vehicle position (FL) in space is evaluated and assessed as a normal or critical driving state (Z1, Z2), **characterized in that** an acquisition direction (ER) of a sensor unit (12) is predefined such that the acquisition direction (ER) lies in a horizontal plane (x-y) in an upright normal rest position (RL1) of the motorcycle (1) and the acquired acceleration-related information (a, ax, ay, az) comprises a first acceleration component (ax) in the vehicle longitudinal direction (X) and a second acceleration component (ay) in the vehicle transverse direction (Y), wherein the plausibility of a driving state (Z2) assessed as critical is checked with the estimated vehicle movement (FB) in order to identify a critical rest position (RL2) following an accident, and an emergency call (NR) is generated upon an identified critical rest position (RL2) following an accident.

2. Method according to Claim 1, **characterized in that** the currently estimated vehicle position (FL) in space is assessed as a normal driving state (Z1) when the vehicle position (FL) lies within a defined range, or is assessed as a critical driving state (Z2) when the vehicle position (FL) lies outside the defined range.

3. Method according to Claim 1 or 2, **characterized in that** the plausibility of a driving state (Z2) assessed as critical is checked and the critical rest position (RL2) following an accident is concluded when no change in the vehicle movement (FB) is detected over a defined time period with consideration to a temporal threshold value.

4. Method according to one of Claims 1 to 3, **characterized in that** the presence of a collision (K) is estimated based on the acceleration-related information (a, ax, ay, az) and/or quantities ascertained therefrom.

5. Method according to Claim 4, **characterized in that** the presence of a collision (K) is concluded and an emergency call (NR) is generated when the acceleration-related information (a, ax, ay, az) and/or quantities ascertained therefrom exceed at least one predefined threshold value over a defined time period with consideration to a temporal threshold value.

6. Device (10) for monitoring a motorcycle (1), which device is designed to carry out the method according to one of Claims 1 to 5 and comprises a sensor unit (12) and an evaluation and control unit (20), wherein the sensor unit (12) acquires acceleration-related information (a, ax, ay, az) of the motorcycle (1) and outputs it to the evaluation and control unit (20), which evaluates the acceleration-related information (a, ax, ay, az) and ascertains and assesses a current driving state (Z1, Z2).

7. Device (10) according to Claim 6, **characterized in that** the evaluation and control unit (20) generates the emergency call (NR) and transmits it via a communication unit (30).

8. Device (10) according to Claim 6 or 7, **characterized in that** the evaluation and control unit (20) comprises a state estimator (24) that estimates the vehicle position (FL) in three-dimensional space and/or the vehicle movement (FB) and/or estimates the presence of a collision (K).

9. Device (10) according to one of Claims 6 to 8, **characterized in that** the evaluation and control unit (20) filters the acceleration-related information (a, ax, ay, az) using at least one filter unit (22) and ascertains the further quantities.

10. Motorcycle (1) having a device (10) for monitoring a motorcycle (1) and an emergency call device (30), **characterized in that** the device (10) is designed to monitor a motorcycle (1) according to one of Claims 6 to 9, wherein the emergency call device (30) places the emergency call (NR) generated by the evaluation and control unit (20).

11. Computer program that is designed to carry out the method according to one of Claims 1 to 5.

12. Machine-readable storage medium on which the computer program according to Claim 11 is stored.

## Revendications

1. Procédé de surveillance d'une motocyclette (1), comprenant les étapes consistant à : acquérir et analyser des informations relatives à l'accélération (a, ax, ay, az) de la motocyclette (1), dans lequel, sur la base des informations relatives à l'accélération (a, ax, ay, az) et/ou de grandeurs déterminées à partir de celles-ci, un déplacement de véhicule (FB) et une position de véhicule (FL) dans l'espace tridimensionnel sont estimés, la position de véhicule (FL) estimée actuellement dans l'espace étant analysée et évaluée comme un état de conduite normal ou critique (Z1, Z2),
**caractérisé en ce qu'**une direction d'acquisition (ER) d'une unité de détection (12) est prédéfinie de telle sorte que la direction d'acquisition (ER) dans une position de repos normale redressée (RL1) de la motocyclette (1) se trouve dans un plan horizontal (x-y), et les informations relatives à l'accélération (a, ax, ay, az) acquises comprennent une première composante d'accélération (ax) dans la direction longitudinale de véhicule (X) et une deuxième composante d'accélération (ay) dans la direction transversale de véhicule (Y), dans lequel on vérifie la plausibilité d'un état de conduite (Z2) évalué comme étant critique avec le déplacement de véhicule estimé (FB) afin d'identifier une position de repos critique (RL2) après un accident, et un appel de détresse (NR) est généré si une position de repos critique (RL2) est identifiée après un accident.

2. Procédé selon la revendication 1, **caractérisé en ce que** la position de véhicule (FL) actuellement estimée dans l'espace est évaluée comme un état de conduite normal (Z1) si la position de véhicule (FL) se trouve à l'intérieur d'une zone définie, ou est évaluée comme un état de conduite critique (Z2) si la position de véhicule (FL) se trouve à l'extérieur de la zone définie.

3. Procédé selon la revendication 1 ou 2, **caractérisé en ce que** l'on vérifie la plausibilité d'un état de conduite (Z2) évalué comme étant critique et on conclut à la position de repos (RL2) critique après un accident si lors d'un examen de valeur seuil dans le temps, pendant une période définie, aucun changement du déplacement de véhicule (FB) n'est détecté.

4. Procédé selon l'une quelconque des revendications 1 à 3, **caractérisé en ce que** sur la base des informations relatives à l'accélération (a, ax, ay, az) et/ou de grandeurs déterminées à partir de celles-ci, une présence d'une collision (K) est estimée.

5. Procédé selon la revendication 4, **caractérisé en ce que** l'on conclut à la présence d'une collision (K), et un appel de détresse (NR) est généré, si les informations relatives à l'accélération (a, ax, ay, az) et/ou des grandeurs déterminées à partir de celles-ci lors d'un examen de valeur seuil dans le temps, pendant une période définie, dépassent au moins une valeur seuil prédéfinie.

6. Dispositif (10) de surveillance d'une motocyclette (1), qui est conçu pour exécuter le procédé selon l'une quelconque des revendications 1 à 5 et comprend une unité de détection (12) et une unité d'analyse et de commande (20), l'unité de détection (12) acquérant des informations relatives à l'accélération (a, ax, ay, az) de la motocyclette (1) et les sortant à l'unité d'analyse et de commande (20) qui analyse les informations relatives à l'accélération (a, ax, ay, az) et détermine et évalue un état de conduite actuel (Z1, Z2).

7. Dispositif (10) selon la revendication 6, **caractérisé en ce que** l'unité d'analyse et de commande (20) génère l'appel de détresse (NR) et l'envoie par l'intermédiaire d'une unité de communication (30).

8. Dispositif (10) selon la revendication 6 ou 7, **caractérisé en ce que** l'unité d'analyse et de commande (20) comprend un estimateur d'état (24) qui estime la position de véhicule (FL) dans l'espace tridimensionnel et/ou le déplacement de véhicule (FB) et/ou la présence d'une collision (K).

9. Dispositif (10) selon l'une quelconque des revendications 6 à 8, **caractérisé en ce que** l'unité d'analyse et de commande (20) filtre les informations relatives à l'accélération (a, ax, ay, az) par l'intermédiaire d'au moins une unité de filtrage (22) et détermine les autres grandeurs.

10. Motocyclette (1), comprenant un dispositif (10) de surveillance d'une motocyclette (1) et un dispositif d'appel de détresse (30), **caractérisée en ce que** le dispositif (10) de surveillance d'une motocyclette (1) est réalisé selon l'une quelconque des revendications 6 à 9, le dispositif d'appel de détresse (30) émettant l'appel de détresse (NR) généré par l'unité d'analyse et de commande (20).

11. Programme informatique qui est conçu pour exécuter le procédé selon l'une quelconque des revendications 1 à 5.

12. Support de stockage lisible par machine sur lequel est stocké le programme informatique selon la revendication 11.

Fig. 1

# Fig. 2

# Fig. 3

# Fig. 4a

Y-Axis

Z

B

1

X

Y

45°

B

A Res

EP 3 856 576 B1

# Fig. 4b

**Z-Axis**

## Fig. 4c

## Fig. 4d

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1184233 B1